# EUROPEAN PATENT APPLICATION

(11) **EP 4 779 496 A1**
(43) Date of publication of application: **22.07.2026**
(21) Application number: 26150482.3
(22) Date of filing: 07.01.2026
(51) Int. Cl.: G06F 16/9032, G08G 5/26

(54) **APPARATUSES, COMPUTER-IMPLEMENTED METHODS, AND COMPUTER PROGRAM PRODUCTS FOR GENERATIVE ARTIFICIAL INTELLIGENCE-BASED QUERY SUPPORT**

(30) Priority: 17.01.2025 IN 202511003961; 04.03.2025 US 202519070047
(71) Applicant: Honeywell International Inc., Charlotte, NC 28202 (US)
(72) Inventor: MUDIMALA, Raveendra Reddy, Charlotte, 28202 (US); POTHULA, Phani Ammi Raju, Charlotte, 28202 (US); VADDAPALLY, Santosh, Charlotte, 28202 (US)
(74) Representative: Haseltine Lake Kempner LLP

(57) **Abstract**

Embodiments of the disclosure provide generative AI-based techniques for improving efficiency vehicle operator support. In the context of a method, the method includes obtaining model data from a remote computing environment, wherein: the remote computing environment is external to a vehicle and configured to maintain a large language model (LLM); and the model data is associated with a configuration of the LLM; updating a small language model (SLM) aboard the vehicle based at least in part on the model data; obtaining at least one query for downlink (DL) from a computing device aboard the vehicle; and generating, via the updated SLM, a predictive output based on the at least one query, wherein the predictive output comprises a response to the at least one query.

## Description

### CROSS REFERENCE TO RELATED APPLICATIONS

This application claims the benefit of and priority to India Patent Application No. 202511003961, filed January 17, 2025, entitled "APPARATUSES, COMPUTER-IMPLEMENTED METHODS, AND COMPUTER PROGRAM PRODUCTS FOR GENERATIVE ARTIFICIAL INTELLIGENCE-BASED QUERY SUPPORT," the disclosure of which is incorporated herein by reference in its entirety.

### TECHNOLOGICAL FIELD

Embodiments of the present disclosure are generally directed to generative artificial intelligence (AI) techniques for responding to queries from a vehicle operator.

### BACKGROUND

Typical approaches to responding to vehicle operator queries rely upon manual communication between the vehicle operator and offboard support personnel. For example, in an aerial context, a pilot may request weather information, flight plan information, and/or the like by making structured requests from the aircraft to ground-based personnel. However, such approaches may increase the workload of the vehicle operator and incur significant data transmission costs. Additionally, ground personnel may have limited bandwidth for providing support services to a plurality of vehicles simultaneously. For example, response times for receiving requested information from ground personnel may be delayed in instances of high message traffic, dense vehicle traffic, and/or the like. As a result, communication efficiency may be reduced.

Applicant has discovered various technical problems associated with responding to vehicle operator queries. Through applied effort, ingenuity, and innovation, Applicant has solved many of these identified problems by developing the embodiments of the present disclosure, which are described in detail below.

### BRIEF SUMMARY

In general, embodiments of the present disclosure herein provide for generative AI-based query support. For example, embodiments of the present disclosure are configured to process and respond to queries via a small language model (SLM) aboard a vehicle such that workloads for responding to queries may be offloaded from vehicle-remote personnel to the onboard SLM. In doing so, the methods, apparatuses, and computer program products described herein may improve resource and time efficiency of query support. For example, the various embodiments of the disclosure may read and generate responses to downlink messages via an onboard SLM, whereas existing approaches may require a vehicle operator to await responses from remote support services.

The various embodiments of the disclosure may conditionally downlink queries to an offboard computing environment, such as in instances where confidence in an SLM output fails to satisfy a predetermined threshold. For example, the present methods, apparatuses, and computer program products may provision a query to a remote computing environment such that a large language model (LLM) thereat may generate a query response for uplink to the vehicle. In this manner, the various embodiments of the disclosure may provide and maintain vehicle-based SLMs and one or more offboard LLMs configured to automate workflows for providing requested data and intelligence to vehicle operators. Further, various embodiments of the present disclosure may update the vehicle based SLM based at least in part on configurations of the offboard LLM or SLMs aboard other vehicles, and vice versa. In doing so, the configurations of the various generative AI models may be iterated upon in a federated manner, which may improve individual model performance and extend the scope and depth of model knowledge base. Other implementations for generative AI-based query support will be, or will become, apparent to one with skill in the art upon examination of the following figures and detailed description. It is intended that all such additional implementations be included within this description be within the scope of the disclosure, and be protected by the following claims.

In accordance with a first aspect of the disclosure, a computer-implemented method for improved query support is provided. The computer-implemented method is executable utilizing any of a myriad of computing device(s) and/or combinations of hardware, software, firmware. In some example embodiments an example computer-implemented method includes obtaining model data from a remote computing environment, wherein: the remote computing environment is external to a vehicle and configured to maintain a large language model (LLM); and the model data is associated with a configuration of the LLM; updating a small language model (SLM) aboard the vehicle based at least in part on the model data; obtaining at least one query for downlink (DL) from a computing device aboard the vehicle; and generating, via the updated SLM, a predictive output based on the at least one query, wherein the predictive output comprises a response to the at least one query.

In some embodiments, the method further comprises outputting the response to at least one interface aboard the vehicle. In some embodiments, the predictive output further comprises a probability score indicative of a likelihood of success in resolving the at least one query via the response. In some embodiments, the method further comprises: in response to determining the probability score fails to satisfy a predetermined threshold, provisioning, from the vehicle, a DL message comprising the at least one query to a remote computing environment to cause the remote computing environment to generate a second predictive output via the LLM; receiving, at the vehicle, an uplink (UL) message from the remote computing environment, wherein: the UL message comprises a second predictive output; the second predictive output was generated by the remote computing environment via the LLM; and the second predictive output comprises a second response to the at least one query; and outputting the second response to at least one interface aboard the vehicle.

In some embodiments, the configuration of the LLM is based at least in part on respective model data obtained from a plurality of SLMs aboard other vehicles. In some embodiments, the method further comprises generating second model data based at least in part on a configuration of the SLM aboard the vehicle, the at least one query, and the predictive output; and provisioning the second model data from the vehicle to the remote computing environment to cause the remote computing environment to perform at least one of the following: update the LLM based at least in part on the second model data; or cause an update to at least one SLM aboard another vehicle, the update being based at least in part on the second model data. In some embodiments, the at least one query comprises a request for weather information. In some embodiments, the method further comprises determining that a current position of the vehicle is within a predetermined range of a destination, the destination being based at least in part on travel pathway data associated with the vehicle; obtaining environment data associated with the destination; and generating, via the updated SLM, the predictive output further based at least in part on the environment data associated with the destination.

In some embodiments, the at least one query comprises a request for availability of required navigation performance (RNP) pathways pursuant to a landing site of the vehicle. In some embodiments, the method further comprises generating, via the updated SLM, the predictive output further based at least in part on travel pathway data associated with the vehicle and a position accuracy of the vehicle. In some embodiments, the at least one query comprises a request for notice to air mission (NOTAM) information. In some embodiments, the method further comprises obtaining at least one NOTAM based at least in part on a travel pathway of the vehicle; and generating, via the updated SLM, the predictive output based at least in part on the at least one NOTAM. In some embodiments, the predictive output comprises natural language configured to describe the at least one NOTAM pursuant to the travel pathway of the vehicle. In some embodiments, the at least one NOTAM comprises at least one of a SNOWTAM, BIRDTAM, ASHTAM, temporary flight restriction (TFR), flight data center (FDC) NOTAM, or FLOWTAM.

In some embodiments, the method further comprises causing rendering of a graphical user interface (GUI) on a display of the computing device aboard the vehicle; generating the at least one query for DL based at least in part on a user input to the GUI; and updating the GUI based at least in part on the predictive output. In some embodiments, the GUI further comprises the at least one query. In some embodiments, the method further comprises generating, via a computer voice module, an utterance of the response to the at least one query; and causing output of the utterance within the vehicle via at least one computing device. In some embodiments, the predictive output further comprises a probability score indicative of a likelihood of success in resolving the at least one query via the response. In some embodiments, the method further comprises: in response to a determination that the probability score fails to satisfy a predetermined threshold, provisioning to the remote computing environment a DL message comprising the at least one query; receiving, from the remote computing environment, a UL message comprising a second response to the at least one query, the second response being based at least in part on user input at the remote computing environment; and outputting the second response to at least one interface aboard the vehicle.

In some embodiments, the predictive output further comprises a probability score indicative of a likelihood of success in resolving the query via the response. In some embodiments, the method further comprises causing output of the response on at least interface aboard the vehicle in response to a determination that the probability score satisfies a predetermined threshold. In some embodiments, the method further comprises generating second model data based at least in part on a configuration of the updated SLM aboard the vehicle, the at least one query, and the predictive output; and provisioning the second model data to the remote computing environment to cause the remote computing environment to update the LLM based at least in part on the second model data. In some embodiments, the method further comprises generating second model data based at least in part on a configuration of the updated SLM aboard the vehicle, the at least one query, and the predictive output; and provisioning the second model data to at least one other vehicle to cause the at least one other vehicle to update a second SLM based at least in part on the second model data.

In some embodiments, the at least one query comprises a request for available visibility infrastructure in accordance with a landing site of the vehicle. In some embodiments, the method further comprises generating, via the updated SLM, the predictive output further based at least in part on environment data associated with the landing site. In some embodiments, the method further comprises obtaining an audio recording comprising at least one utterance from an operator of the vehicle; and generating the at least one query based at least in part on the audio recording.

In accordance with another aspect of the present disclosure, a computing apparatus for improved query support is provided. The computing apparatus in some embodiments includes at least one processor and at least one non-transitory memory, the at least non-transitory one memory having computer-coded instructions stored thereon. The computer-coded instructions in execution with the at least one processor causes the apparatus to perform any one of the example computer-implemented methods described herein. In some other embodiments, the computing apparatus includes means for performing each step of any of the computer-implemented methods described herein. In some embodiments, the vehicle comprises the apparatus.

In accordance with another aspect of the present disclosure, a computer program product for improved query support is provided. The computer program product in some embodiments includes at least one non-transitory computer-readable storage medium having computer program code stored thereon. The computer program code in execution with at least one processor is configured for performing any one of the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of a network environment that may be specially configured within which embodiments of the present disclosure may operate.
FIG. 2 illustrates a block diagram of an example apparatus that may be specially configured in accordance with at least some example embodiments of the present disclosure.
FIG. 3 illustrates an example data architecture in accordance with at least some example embodiments of the present disclosure.
FIG. 4 illustrates an example workflow for generative AI-based query support in accordance with at least some example embodiments of the present disclosure.
FIG. 5 illustrates a flowchart depicting operations of an example process for providing generative AI-based query support in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

Embodiments of the present disclosure provide a myriad of technical advantages in the technical field of automated query support. Typically, vehicle operator queries are downlinked to a remote support center such that personnel may review the query and manually craft a response for uplink to the vehicle. However, such processes may require substantial manual effort to structure queries and responses. Vehicle operators may lack bandwidth to properly structure the downlink message and control the vehicle. Further, remote support personnel may demonstrate prolonged response times in instances of receiving queries from a multitude of vehicles within a short period. As a result, the messaging workloads of the vehicle operator and support personnel may become excessive and repetitive.

Embodiments of the present disclosure overcome the technical challenges of efficiently resolving queries by providing onboard small language models (SLMs) configured to respond to queries such that query support may be performed without reliance upon offboard personnel. For example, the present methods, apparatuses, and computer program products may generate a predictive output via an onboard SLM, the predictive output comprising natural language text predicted based at least in part on a query and a localized knowledge base. The methods, apparatuses, and computer program products may determine that the predictive output satisfies confidence criteria, thresholds, and/or the like, and, in response, output the AI-generated response to the vehicle operator. In this manner, query support workloads may be offloaded from remote personnel and centralized within the vehicle. As a result, query response times and data costs may be reduced.

In various embodiments, the methods, apparatuses, and computer program products are configured to conditionally downlink queries to a remote computing environment such that an offboard LLM (e.g., with greater processing capability, parameter size, and/or the like) may generate a response to the query. For example, in response to determining that a predictive output of the onboard SLM fails to satisfy a confidence threshold, the query may be provisioned to a remote computing environment such that a second predictive output may be generated by the LLM and uplinked to the vehicle. Additionally, in some embodiments, the methods, apparatuses, and computer program products are configured to update the onboard SLM based at least in part on configurations of the offboard LLM, and vice versa. In this manner, a plurality of onboard SLMs and the offboard LLM may be trained in a federated manner based on the different queries and scenarios encounter on the various vehicles and at ground. In doing so, the method, apparatus, and computer program product may increase the efficiency of query support.

### Definitions

"Vehicle" refers to any apparatus that traverses throughout an environment by any mean of travel. In some contexts, a vehicle transports goods, persons, and/or the like, or traverses itself throughout an environment for any other purpose, by means of air, sea, or land. In some embodiments, a vehicle is ground-based, air-based, water-based, space-based (e.g., outer space or within an orbit of a planetary body, a natural satellite, or artificial satellite), and/or the like. In some embodiments, the vehicle is an aerial vehicle capable of air travel. Non-limiting examples of aerial vehicles include urban air mobility vehicles, drones, helicopters, fully autonomous air vehicles, semi-autonomous air vehicles, airplanes, orbital craft, spacecraft, and/or the like. In some embodiments, the vehicle is piloted by a human operator onboard the vehicle. For example, in an aerial context, the vehicle may be a commercial airliner operated by a flight crew. In some embodiments, the vehicle is remotely controllable such that a remote operator may initiate and direct movement of the vehicle. Additionally, in some embodiments, the vehicle is unmanned. For example, the vehicle may be a powered, aerial vehicle that does not carry a human operator and is piloted by a remote operator using a control station. In some embodiments, the vehicle is an aquatic vehicle capable of surface or subsurface travel through and/or atop a liquid medium (e.g., water, water-ammonia solution, other water mixtures, and/or the like). Non-limiting examples of aquatic vehicles include unmanned underwater vehicles (UUVs), surface watercraft (e.g., boats, jet skis, and/or the like), amphibious watercraft, hovercraft, hydrofoil craft, and/or the like. As used herein, vehicle may refer to vehicles associated with advanced air mobility (AAM).

"AAM" refers to advanced air mobility, which includes all aerial vehicles and functions for aerial vehicles that are capable of performing vertical takeoff and/or vertical landing procedures. Non-limiting examples of AAM aerial vehicles include passenger transport vehicles, cargo transport vehicles, small package delivery vehicles, unmanned aerial system services, autonomous drone vehicles, and ground-piloted drone vehicles, where any such vehicle is capable of performing vertical takeoff and/or vertical landing.

"Generative artificial intelligence (AI) model" refers to any algorithmic and/or machine learning model that generates text, images, videos, or other data based at least in part on one or more instructions provided in a natural language format. In some embodiments, a generative AI model includes one or more large language models (LLMs) including autoregressive language models, autoencoding language models, and/or the like. Additionally, or alternatively, in some embodiments, a generative AI model comprises an architecture based at least in part on generative adversarial networks (GANs), variational autoencoders (VAEs), autoregressive models, recurrent neural networks (RNNs), transformers, image generators, and/or the like.

"Query" refers to any request for information associated with operation of a vehicle or navigation of the vehicle along a travel pathway. For example, a query may include requests for information pursuant to weather, a travel pathway, a landing site, vehicle advisories, and/or the like. A query may include predefined keywords, key phrases, data link syntax (e.g., ARINC or other standard-formatted values), and/or the like. In some embodiments, a query includes or embodies natural language input obtained via one or more computing devices.

"Natural language" refers to textual information, or an utterance of textual information, intelligible to human users and in accordance with parlance of the human users. For example, natural language may comprise a body of textual content that defines a grammatically accurate and typographically correct series of phrases, sentences, paragraphs, and/or the like.

"Natural language input" refers to textual information that originates from one or more inputs of a human user. For example, natural language input may include textual content that is inputted by a user into a computing device. As another example, a natural language input may include recorded human speech based upon which textual information may be generated.

"Predictive output" refers to refers to natural language text that is generated by a generative AI model. For example, a natural language output may comprise output of an LLM. In some embodiments, natural language output includes non-textual content outputted by a generative AI model. For example, natural language output may include natural language text generated by an LLM and one or more images generated by an image generation model. As another example, natural language output may include utterances of natural language text, such as in the form of computer voice-based audio.

### Example Systems and Apparatuses of the Disclosure

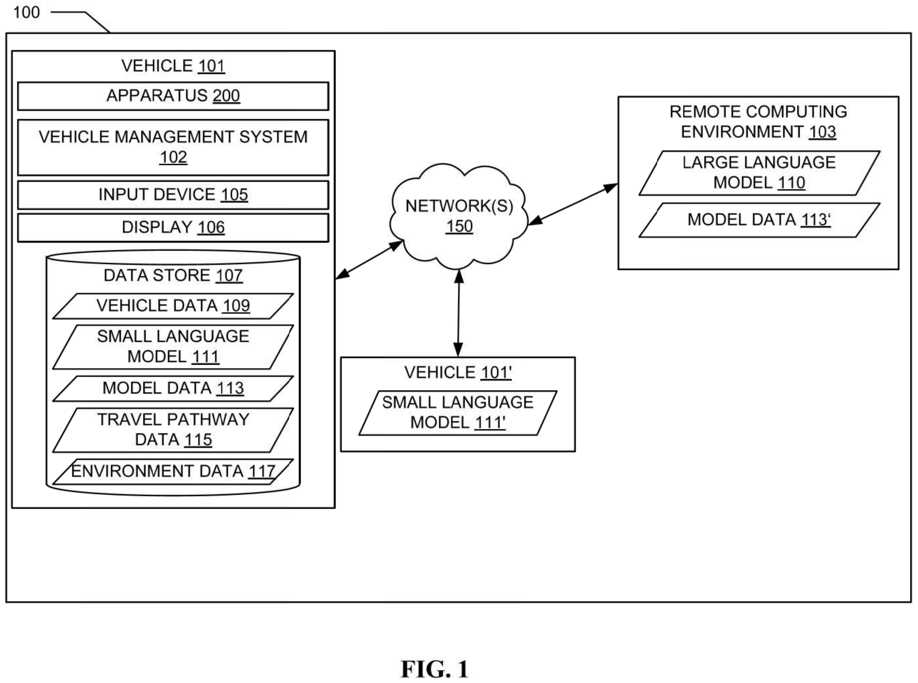

FIG. 1 illustrates a block diagram of a network environment that may be specially configured within which embodiments of the present disclosure may operate. Specifically, FIG. 1 depicts an example networked environment 100. As illustrated, the networked environment 100 includes one or more vehicles 101, a remote computing environment 103, and, optionally, one or more additional vehicles 101'.

**In** various embodiments, the vehicle 101 includes an apparatus 200 configured to perform various functions and actions related to enacting techniques and processes described herein for responding to queries, evaluating potential query responses, and maintaining and updating generative AI models. In various embodiments, the vehicle 101 includes a vehicle management system 102, one or more input devices 105, one or more displays 106, and/or the like.

**In** some embodiments, the vehicle management system 102 is configured to generate or obtain vehicle data 109 that is indicative of operation of the vehicle 101. Additionally, in some embodiments, the vehicle management system 102 is configured to control the vehicle 101. The vehicle management system 102 may include any number of computing device(s) and/or other system(s) embodied in hardware, software, firmware, and/or the like. For example, the vehicle management system 102 may include one or more vehicle controls (e.g., rotor speed, rotor orientation, thrust, brakes, flaps, and/or the like). In some embodiments, the vehicle management system 102 includes one or more vehicle recording systems configured to obtain and record one or more aspects of the vehicle or operation thereof. For example, the vehicle management system 102 may include a transponder, data uplink system, traffic collision avoidance system (TCAS), automatic dependent surveillance-broadcast (ADS-B), flight recorder, and/or the like. In some embodiments, the vehicle management system 102 is configured to receive vehicle data 109, travel pathway data 115, environment data 117, and/or the like, from one or more external systems (e.g., weather reporting services, vehicle traffic services, vehicle alert services, landing site guidance services, and/or the like). The vehicle data 109 obtained by the vehicle management system 102 may be stored in one or more data stores 107. In some embodiments, the vehicle management system 102 includes or is in communication with one or more sensors of the vehicle 101. For example, the vehicle management system 102 may include or communicate with image sensors, pressure sensors, temperature sensors, audio sensors, accelerometers, gyroscopes, magnetometers, inertial measurement units, and/or the like.

In various embodiments, the vehicle management system 102 includes one or more sensors, systems, and/or the like configured to determine a physical position of the vehicle 101. For example, the vehicle management system 102 may include one or more satellite-based positioning systems configured to generate a geographic orientation of a vehicle, such as a global position system (GPS) module. In some embodiments, the vehicle management system 102 and/or apparatus 200 is/are configured to obtain and store vehicle data 109, travel pathway data 115, environment data 117, and/or the like, and store the data in one or more data stores 107. For example, the vehicle management system 102, apparatus 200, and/or the like may store travel pathway information, weather reports, landing site documentation, maintenance reports, and/or the like at the data store 107 such that an SLM 111 may draw upon the data as a knowledge base.

In some embodiments, the input device 105 is configured to receive user inputs. For example, the input device 105 may receive user selections for defining a query. As another example, the input device 105 may generate an audio recording including utterances of the vehicle operator (e.g., based upon which a query may be generated). The input device 105 may include any number of devices that enable HMI between a vehicle operator, the vehicle management system 102, the apparatus 200, and/or the like. In some embodiments, the input device 105 includes one or more buttons, cursor devices, joysticks, touch screens, including three-dimensional or pressure-based touch screens, camera, finger-print scanners, accelerometer, retinal scanner, gyroscope, magnetometer, or other input devices. For example, the input device 105 may include a touchscreen by which a vehicle operator may provide user inputs for requesting information, guidance, confirmation, and/or the like, from the apparatus 200. In some embodiments, the input device 105 includes one or more vehicle controls (e.g., joysticks, thumbsticks, yokes, steering wheels, accelerator control, thrust control, brake control, and/or the like) that enable an operator to control and navigate the vehicle 101. In some embodiments, the display 106 includes a CRT (cathode ray tube), LCD (liquid crystal display) monitor, LED (light-emitting diode) monitor, and/or the like, for displaying information/data to an operator of the vehicle 101.In various embodiments, graphical user interfaces (GUIs) and other information related to queries, responses, and/or the like, are rendered on the display 106. Additionally, or alternatively, in some embodiments, the vehicle 101 includes one or more audio devices configured to output audio effects including computer voice-based utterances.

In some embodiments, the vehicle 101 includes one or more data stores 107. The various data in the data store 107 may be accessible to one or more of the apparatus 200, the vehicle management system 102, the remote computing environment 103, and/or the like. The data store 107 may be representative of a plurality of data stores 107 as can be appreciated. The data stored in the data store 107, for example, is associated with the operation of the various applications, apparatuses, and/or functional entities described herein. The data stored in the data store 107 may include, for example, vehicle data 109, one or more SLMs 111, model data 113, travel pathway data 115, environment data 117, and/or the like.

In various embodiments, vehicle data 109 includes any data associated with the operator or operation of the vehicle 101. In some embodiments, the vehicle data 109 includes readings from one or more sensors or systems aboard the vehicle 101. For example, the vehicle data 109 may include temperatures, pressures, humidity levels, oxygen levels, carbon dioxide levels, and/or the like of the vehicle exterior or vehicle interior. As another example, the vehicle data 109 may include images, videos, audio recordings, and/or the like of the vehicle exterior or vehicle interior. As another example, the vehicle data 109 may include measurements of vehicle speed, acceleration, ascension, descension, pitch, turning rate, bank angle, and/or the like. In some embodiments, vehicle data 109 includes a metric of difference between a sensor measurement and a predetermined threshold, such as a target value, target range, limit, and/or the like. In some embodiments, vehicle data 109 includes a physical location of the vehicle 101, a proximity of the vehicle 101 to one or more physical locations (e.g., destinations, points of interest, and/or the like), a proximity of the vehicle 101 to other vehicles 101', and/or the like.

In some embodiments, model data 113, 113' includes data that defines one or more generative AI models. For example, the model data 113, 113' may include data that defines one or more SLMs 111, LLMs 110, and/or the like. In some embodiments, the model data 113 includes data for training a generative AI model to perform a task. For example, the model data 113 may include one or more knowledge bases comprising textual information by which an SLM 111, LLM 110, and/or the like may be trained to generate predictive natural language outputs. The knowledge bases of the SLM 111, LLM 110, and/or the like may further comprise vehicle data 109, travel pathway data 115, environment data 117, historical queries, historical responses, and/or the like. In some embodiments, the model data 113 includes queries, predictive outputs, probability scores, probability thresholds, and/or the like. In some embodiments, the model data 113 includes adjustable model settings or parameters.

In some embodiments, travel pathway data 115 includes data associated with a course of travel for a vehicle 101 (e.g., referred to as a "travel pathway"). In some embodiments, travel pathway data 115 includes travel origins, destinations, and routes between travel origins and destinations. For example, in an aerial context, the travel pathway data 115 may include a target landing site for the vehicle 101. In some embodiments, the travel pathway data 115 includes routes of approach to a destination. For example, the travel pathway data 115 may include predetermined approaches to a landing site, such as required navigation performance (RNP) approaches or pathways to an airport. The RNP pathways may further include threshold levels of position accuracy (e.g., GPS accuracy and/or the like), which may be requisite for RNP pathway eligibility. In some embodiments, travel pathway data 115 and/or vehicle data 109 includes a phase or progression of the vehicle 101 along a travel pathway. For example, the travel pathway data 115 may include indications that the vehicle 101 is at stages of taxi, takeoff, ascent, cruising, pre-descent, descent, landing, arrival, and/or the like. In some embodiments, the travel pathway data 115 includes notices associated with one or more segments of the travel pathway. For example, travel pathway data 115 may include notice to air mission (NOTAM) information comprising one or more NOTAMs (e.g., SNOWTAM, BIRDTAM, ASHTAM, temporary flight restriction (TFR), flight data center (FDC) NOTAM, FLOWTAM, and/or the like).

In some embodiments, environment data 117 includes presence of turbulence conditions or the forecasting of turbulent conditions (e.g., wind shear, mechanical turbulence, thermal turbulence, frontal turbulence, and/or the like). Additionally, or alternatively, environment data 117 includes present or forecasted weather (e.g., winds, precipitation, temperature, fog, smog, dust), and/or the like. In some embodiments, environment data 117 includes data associated with a landing site of the vehicle 101. In some embodiments, the data associated with the landing site includes landing site location, available visibility structure, available routes to the landing site, and/or the like. For example, the environment data may include documentation on the availability of runway visual range, lighting aides, retroreflective markings, and/or the like, for guiding the vehicle 101 to a landing site.

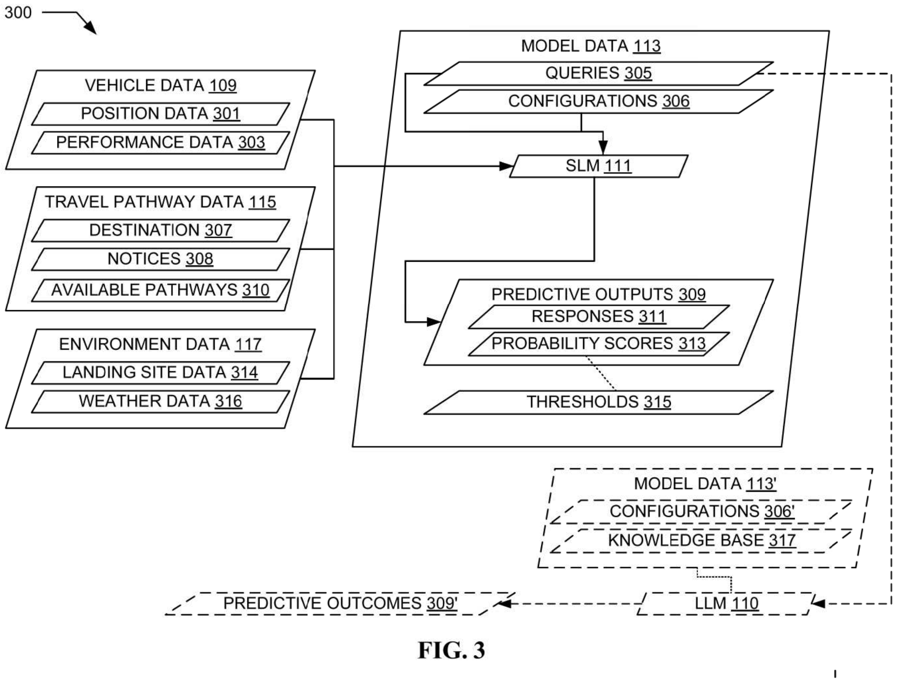

Additional example aspects of the vehicle data 109, LLM 110, SLM 111, model data 113, travel pathway data 115, and environment data 117 are shown in the data architecture 300 depicted in FIG. 3 and described herein.

In various embodiments, the apparatus 200 is configured to instruct an SLM 111 to generate a predictive output based at least in part on a query, which may be obtained from a vehicle operator. The predictive output may include natural language text that embodies a response to the query. The apparatus 200 may output the response to one or more interfaces of the vehicle, such as by causing rendering of a graphical user interface (GUI) comprising the response, by triggering an audio device to output an utterance of the response, and/or the like. In this manner, by responding to queries via an onboard SLM 111, the apparatus 200 may obviate a need to downlink vehicle operator queries to offboard resources, such as ground-based support personnel. As a result, query response times and data communication workloads may be reduced.

In some embodiments, the apparatus 200 is configured to determine that a probability score of the response fails to satisfy one or more predetermined thresholds. A respective threshold may be associated with a confidence level, such as a likelihood that the response provides accurate information, guidance, confirmation, and/or the like, which was requested via the inputted query. In response to the determination, the apparatus 200 may provision to the remote computing environment 103 a downlink message comprising the query. In doing so, the apparatus 200 may cause the remote computing environment 103 to generate a predictive output via the LLM 110. The predictive output of the LLM 110 may comprise a second response to the query. The apparatus 200 may receive and output the second response to one or more interfaces aboard the vehicle 101. In this manner, the apparatus 200 may conditionally engage offboard, generative AI-based resources to respond to operator queries in instances where the SLM 111 is unable to generate a response with requisite confidence.

In various embodiments, the remote computing environment 103 includes any number of computing resources embodied in hardware, software, firmware, and/or the like, that are configured to maintain and update an LLM 110, generate predictive outputs via the LLM 110, and communicate predictive outputs, model data, and/or the like to the apparatus 200. In some embodiments, the remote computing environment 103 is associated with a ground station or another installation that is external to the vehicle 101. In some embodiments, the remote computing environment 103 is configured to receive queries from the apparatus 200 and generate predictive outputs based thereon via the LLM 110. In some embodiments, the remote computing environment 103 is configured to update the LLM 110 based at least in part on queries, predictive outputs, model data 113, and/or the like, obtained from one or more apparatuses 200 (e.g., which may be located on different vehicles 101). In some embodiments, the remote computing environment 103 provides vehicles 101, 101' and other computing devices with access to services and functionality of the LLM 110. For example, in addition to providing query support to vehicles, the remote computing environment 103 may provide query support to ground-based customer teams, operations personnel, and/or the like.

In some embodiments, the apparatus 200 is configured to update the onboard SLM 111 based at least in part on model data 113' obtained from the remote computing environment 103. For example, the apparatus 200 may receive, from the remote computing environment 103, model data 113' comprising a respective configuration of the offboard LLM 110, a respective configuration of an SLM 111 located on another vehicle 101', and/or the like. The apparatus 200 may update the configuration of the SLM 111 aboard the vehicle 101 based at least in part on the model data 113'. Additionally, or alternatively, in some embodiments, the apparatus 200 is configured to receive model data from additional vehicles 101', which may include a respective configuration of other onboard SLMs 111'. The apparatus 200 may update the SLM 111 aboard the first vehicle 101 based at least in part on model data associated with one or more SLMs 111' aboard additional vehicles 101'.

In some embodiments, the apparatus 200 is configured to generate model data 113 comprising a current configuration of the onboard SLM 111. In some embodiments, the apparatus 200 provisions the model data 113 to the remote computing environment 103, other vehicles 101', and/or the like, to effect updates to the LLM 110 or other SLMs 111'. For example, in response to generating a predictive output having a threshold-satisfying probability score, the apparatus 200 may provision a current configuration of the SLM 111, the predictive output, the input query, and/or the like, to the remote computing environment 103, vehicle 101', and/or the like.

In some embodiments, the apparatus 200 is configured to cause rendering of GUIs on one or more displays 106. A respective GUI may include fields configured to receive user inputs for defining queries. A respective GUI may include one or more responses generated by the SLM 111. For example, the GUI may include natural language text that embodies a response to a query inputted by a vehicle operator. In some embodiments, the apparatus 200 iteratively updates the GUI to display a conversational representation of queries and responses. In some embodiments, the apparatus 200 is configured to obtain an audio recording of a vehicle operator's speech and generate a query based at least in part on the audio recording and one or more language recognition techniques. In some embodiments, the apparatus 200 is configured to render the generated query on the display 106 such that the vehicle operator may confirm or reject the query (e.g., via user inputs, additional speech, and/or the like). In some embodiments, the apparatus 200 is configured to generate utterances of responses such that the responses may be audibly outputted to the vehicle operator. For example, the apparatus 200 may generate audio media based at least in part on a computer voice module and the natural language text of the generated response.

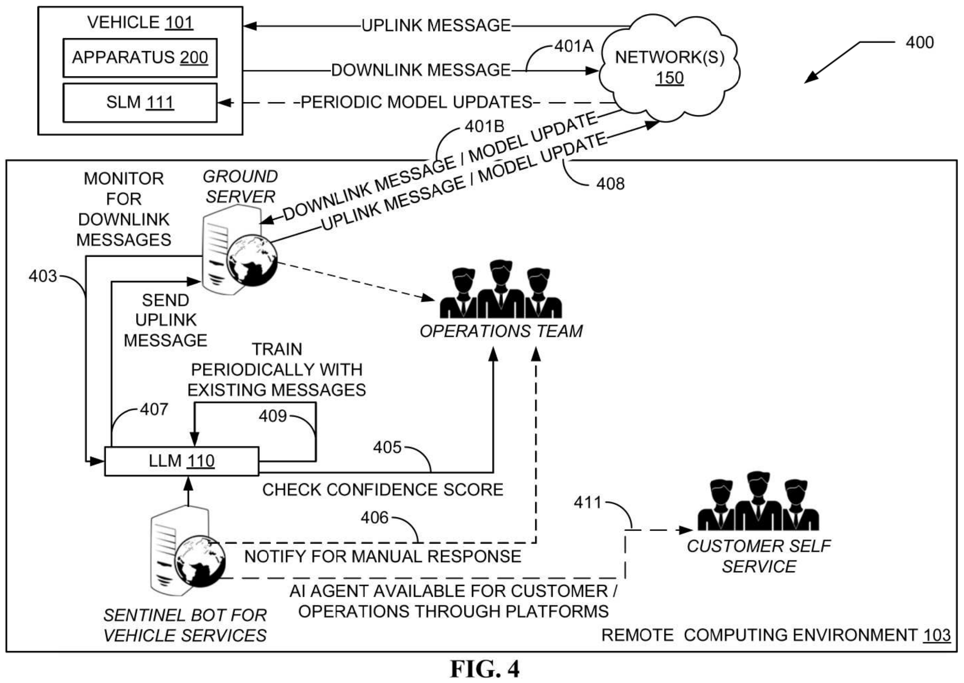

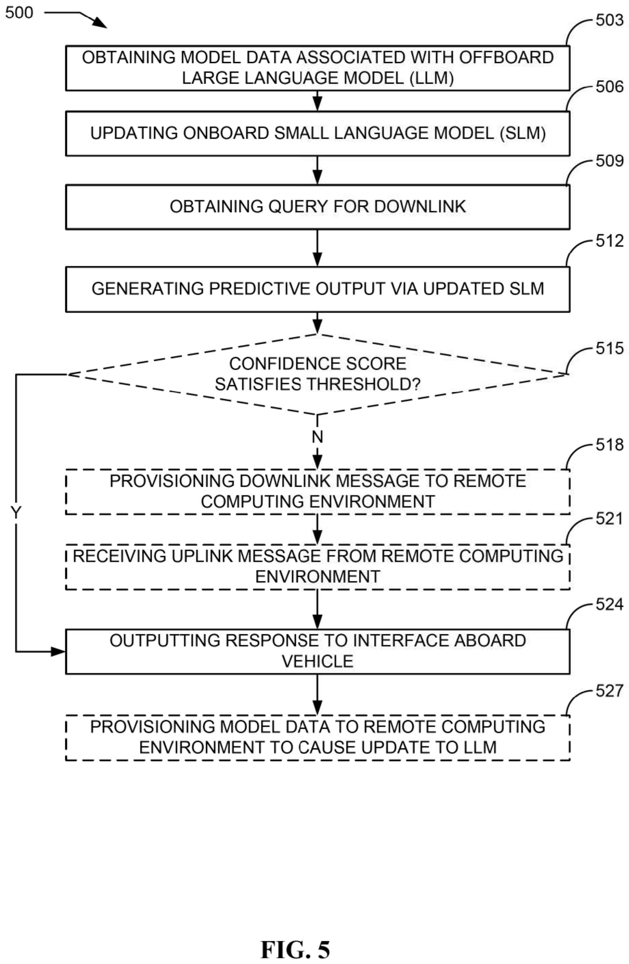

Additional example functionality, workflows, and processes of the apparatus 200 are shown in the workflow 400 and process 500 depicted in FIGS. 4 and 5, respectively, and described herein.

In some embodiments, the apparatus 200, vehicle management system 102, input devices 105, displays 106, remote computing environment 103, other vehicles 101', and/or the like, are communicable over one or more communications network(s), for example the communications network(s) 150. It should be appreciated that the communications network 150 in some embodiments is embodied in any of a myriad of network configurations. In some embodiments, the communications network 150 embodies a public network (e.g., the Internet). In some embodiments, the communications network 150 embodies a private network (e.g., an internal, localized, and/or closed-off network between particular devices). In some other embodiments, the communications network 150 embodies a hybrid network (e.g., a network enabling internal communications between particular connected devices and external communications with other devices). In some embodiments, the communications network 150 embodies a satellite-based communication network. Additionally, or alternatively, in some embodiments, the communications network 150 embodies a radio-based communication network that enables communication between the apparatus 200, the vehicle management system 102, the input device 105, the display 106, the remote computing environment 103, other vehicles 101', and/or the like. For example, the apparatus 200 may provision downlink messages and receive uplink messages via a transponder, communication gateway, and/or the like. The communications network 150 in some embodiments may include one or more transponders, satellites, base station(s), relay(s), router(s), switch(es), cell tower(s), communications cable(s) and/or associated routing station(s), and/or the like. In some embodiments, the communications network 150 includes one or more user-controlled computing device(s) (e.g., a user owner router and/or modem) and/or one or more external utility devices (e.g., Internet service provider communication tower(s) and/or other device(s)).

Each of the components of the system communicatively coupled to transmit data to and/or receive data from one another over the same or different wireless or wired networks embodying the communications network 150. Such configuration(s) include, without limitation, a wired or wireless Personal Area Network (PAN), Local Area Network (LAN), Metropolitan Area Network (MAN), Wide Area Network (WAN), satellite network, radio network, and/or the like. Additionally, while FIG. 1 illustrate certain system entities as separate, standalone entities communicating over the communications network 150, the various embodiments are not limited to this particular architecture. In other embodiments, one or more computing entities share one or more components, hardware, and/or the like, or otherwise are embodied by a single computing device such that connection(s) between the computing entities are over the communications network 150 are altered and/or rendered unnecessary.

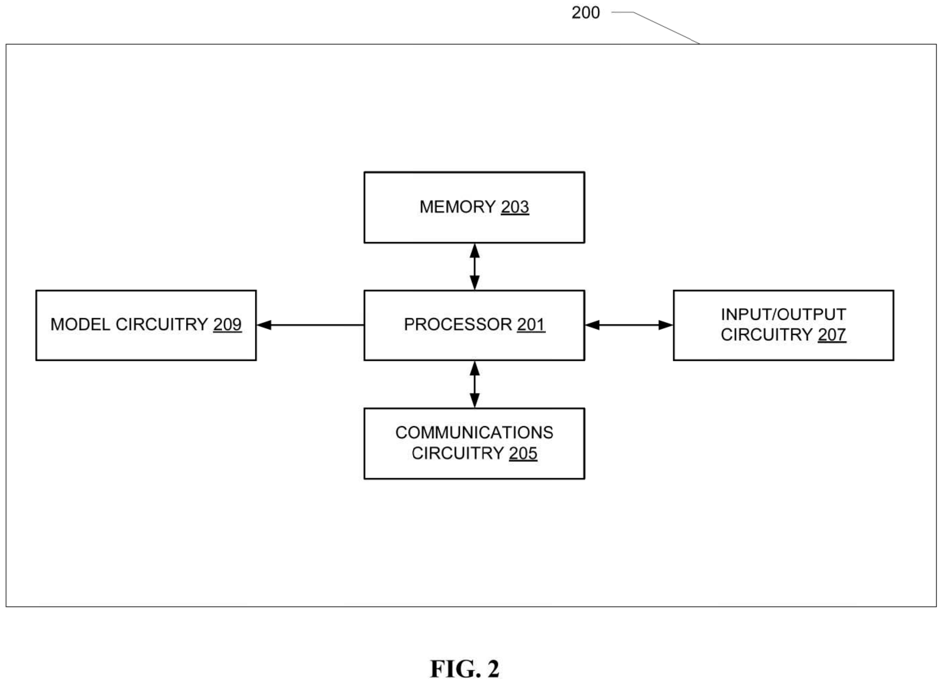

FIG. 2 illustrates a block diagram of an example apparatus 200 that may be specially configured in accordance with at least some example embodiments of the present disclosure. The apparatus 200 may carry out functionality and processes described herein to automate query support at least in part by processing and responding to vehicle operator queries via an onboard generative AI model. In some embodiments, the apparatus 200 includes a processor 201, memory 203, communications circuitry 205, input/output circuitry 207, and model circuitry 209. In some embodiments, the apparatus 200 is configured, using one or more of the processor 201, memory 203, communications circuitry 205, input/output circuitry 207, and/or model circuitry 209, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, controlling, modifying, outputting, restoring, processing, displaying, storing, determining, creating/generating, predicting, monitoring, evaluating, comparing, and/or similar terms used herein interchangeably. In one embodiment, these functions, operations, and/or processes may be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the apparatus 200 provide or supplement the functionality of another particular set of circuitry. For example, the processor 201 in some embodiments provides processing functionality to any of the sets of circuitry, the memory 203 provides storage functionality to any of the sets of circuitry, the communications circuitry 205 provides network interface functionality to any of the sets of circuitry, and/or the like.

In some embodiments, the processor 201 (and/or co-processor or any other processing circuitry assisting or otherwise associated with the processor) is/are in communication with the memory 203 via a bus for passing information among components of the apparatus 200. In some embodiments, for example, the memory 203 is non-transitory and may include, for example, one or more volatile and/or non-volatile memories. In other words, for example, the memory 203 in some embodiments includes or embodies an electronic storage device (e.g., a computer readable storage medium). In some embodiments, the memory 203 is configured to store information, data, content, applications, instructions, or the like, for enabling the apparatus 200 to carry out various functions in accordance with example embodiments of the present disclosure (e.g., maintaining and updating SLMs, processing queries, generating predictive outputs, outputting responses, and/or the like). In some embodiments, the memory 203 is embodied as a data store 107 as shown in FIG. 1 and described herein. In some embodiments, the memory 203 includes vehicle data 109, model data 113, travel pathway data 115, environment data 117, and/or the like, as further architected in FIG. 3 and described herein.

The processor 201 may be embodied in a number of different ways. For example, in some embodiments, the processor 201 includes one or more processing devices configured to perform independently. Additionally, or alternatively, in some embodiments, the processor 201 includes one or more processor(s) configured in tandem via a bus to enable independent execution of instructions, pipelining, and/or multithreading. The use of the terms "processor" and "processing circuitry" should be understood to include a single core processor, a multicore processor, multiple processors internal to the apparatus 200, and/or one or more remote or "cloud" processor(s) external to the apparatus 200.

In an example embodiment, the processor 201 is configured to execute instructions stored in the memory 203 or otherwise accessible to the processor. Additionally, or alternatively, the processor 201 in some embodiments is configured to execute hard-coded functionality. As such, whether configured by hardware or software methods, or by a combination thereof, the processor 201 represents an entity (e.g., physically embodied in circuitry) capable of performing operations according to an embodiment of the present disclosure while configured accordingly. Additionally, or alternatively, as another example in some example embodiments, when the processor 201 is embodied as an executor of software instructions, the instructions specifically configure the processor 201 to perform the algorithms embodied in the specific operations described herein when such instructions are executed.

As one particular example embodiment, the processor 201 is configured to perform various operations associated with providing query support. In some embodiments, the processor 201 includes hardware, software, firmware, and/or the like, that obtain vehicle data, travel pathway data, environment data, and/or the like from vehicle management systems 102, input devices 105, remote computing environments 103, and/or the like. For example, the processor 201 may obtain vehicle statuses from one or more vehicle management systems 102 configured to generate or measure vehicle speed, position, acceleration, health, and/or the like. As another example, the processor 201 may model data 113 from a remote computing environment 103. As another example, the processor 201 may generate queries based at least in part on audio recordings of utterances from a vehicle operator. In another example, the processor 201 may generate utterances of responses via a computer voice module.

In some embodiments, the apparatus 200 includes input/output circuitry 207 that provides output to a user and, in some embodiments, receives an indication of a user input. In various embodiments, the user is an operator of a vehicle 101, where the operator may be aboard the vehicle 101. For example, in some contexts, the input/output circuitry 207 provides output to and receives input from one or more interfaces aboard the vehicle 101, such as input devices 105, displays 106, audio input/output devices, and/or the like. In some embodiments, the input/output circuitry 207 is in communication with the processor 201 to provide such functionality. The input/output circuitry 207 may comprise one or more user interface(s) and in some embodiments includes a display that comprises the interface(s) rendered as a web user interface, an application user interface, a user device, a backend system, or the like. In some embodiments, the input/output circuitry 207 also includes a keyboard, a mouse, a joystick, vehicle controls (e.g., steering, power, braking, and/or the like), a touch screen, touch areas, soft keys a microphone, a speaker, and/or other input/output mechanisms. The processor 201 and/or input/output circuitry 207 comprising the processor may be configured to control one or more functions of one or more user interface elements through computer program instructions (e.g., software and/or firmware) stored on a memory accessible to the processor 201 (e.g., memory 203, and/or the like). In some embodiments, the input/output circuitry 207 includes or utilizes a user-facing application to provide input/output functionality to a display, audio input/output device, and/or the like.

In some embodiments, the apparatus 200 includes communications circuitry 205. The communications circuitry 205 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 205 includes, for example, a network interface for enabling communications with a wired or wireless communications network, such as the network 150 shown in FIG. 1 and described herein. Additionally, or alternatively in some embodiments, the communications circuitry 205 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 205 includes circuitry for interacting with the antenna(s) and/or other hardware or software to cause transmission of signals via the antenna(s) or to handle receipt of signals received via the antenna(s). In some embodiments, the communications circuitry 205 enables transmission to and/or receipt of data from vehicle management systems 102, input devices 105, other vehicles 101, and remote computing environments 103 in communication with the apparatus 200. For example, the communications circuitry 205 may enable receipt of uplink messages from a remote computing environment 103. As another example, the communications circuitry 205 may enable the provision of downlink messages to the remote computing environment 103.

The model circuitry 209 includes hardware, software, firmware, and/or a combination thereof, that carry out processes for providing automated query support via generative AI models. For example, in some contexts, the model circuitry 209 includes hardware, software, firmware, and/or the like, that maintain and update an SLM 111. In some embodiments, the model circuitry 209 includes hardware, software, firmware, and/or the like, that generate, via the SLM 111, a predictive output comprising a response to a query. In some embodiments, the model circuitry 209 includes hardware, software, firmware, and/or the like, that determine a request with which a query is associated. For example, via the SLM 111 or other language recognition techniques, the model circuitry 209 may determine that a query is associated with requests for weather information, NOTAM information, RNP availability, availability of landing site visibility infrastructure, and/or the like.

In some embodiments, the model circuitry 209 includes hardware, software, firmware, and/or the like, that determine whether a probability score of a predictive output satisfies one or more predetermined thresholds. For example, the model circuitry 209 may determine whether a level of confidence in an SLM-generated output is adequate for directly outputting the response to the vehicle operator (e.g., or if offboard query support via an LLM 110 is required). In some embodiments, the model circuitry 209 includes hardware, software, firmware, and/or the like, that cause outputting of responses to one or more interfaces of a vehicle 101. For example, the model circuitry 209 may cause outputting of GUIs, audio effects, and/or the like. In some embodiments, the model circuitry 209 includes hardware, software, firmware, and/or the like, that generate model data 113 such that an LLM 110 and/or SLMs 111 on other vehicles 101 may be updated based at least in part on the model data. In some embodiments, the model circuitry 209 includes a separate processor, specially configured field programmable gate array (FPGA), and/or a specially programmed application specific integrated circuit (ASIC).

Additionally, or alternatively, in some embodiments, two or more of the processor 201, memory 203, communications circuitry 205, input/output circuitry 207, and/or model circuitry 209 are combinable. Additionally, or alternatively, in some embodiments, one or more of the sets of circuitry perform some or all of the functionality described associated with another component. For example, in some embodiments, two or more of the sets of circuitry 201-209 are combined into a single module embodied in hardware, software, firmware, and/or a combination thereof. Similarly, in some embodiments, one or more of the sets of circuitry, for example the memory 203, communication circuitry 205, and/or model circuitry 209 is/are combined with the processor 201, such that the processor 201 performs one or more of the operations described above with respect to each of these sets of circuitry 203-209.

### Example Data Architecture and Workflows of the Disclosure

Having described example systems and apparatuses in accordance with embodiments of the present disclosure, example architectures of data in accordance with the present disclosure will now be discussed. In some embodiments, the systems and/or apparatuses described herein maintain data environment(s) that enable the workflows in accordance with the data architectures described herein. For example, in some embodiments, the systems and/or apparatuses described herein function in accordance with the data architectures depicted and described herein with respect to FIG. 3, which are maintained via the apparatus 200. As another example, in some embodiments, the systems and/or apparatuses described herein function in accordance with the workflow 400 shown in FIG. 4 and described herein.

FIG. 3. illustrates an example data architecture 300 in accordance with at least some example embodiments of the present disclosure. In some embodiments, vehicle data 109 includes heading, attitude, velocity, acceleration, pitch, travel phase (e.g., taxiing, ascending, cruising, descending, arriving, and/or the like), altitude, internal temperature, internal pressure, vibration level, respective component or system health, and/or the like. In some embodiments, vehicle data 109 includes position data 301 indicative of a geographical position of the vehicle 101. In some embodiments, the position data 301 includes a position of the vehicle 101 relative to one or more locations or other vehicles, and/or the like. For example, the vehicle data 109 may include one or more measures of distance between the vehicle 101 and other vehicles, a landing site, a geofence, a political boundary, a geographical feature, a point of interest, and/or the like.

In some embodiments, vehicle data 109 includes performance data 303 by which accuracy of the position data 301 may be determined. In some embodiments, performance data 303 comprises respective accuracy levels associated with monitoring a current geographical position of the vehicle 101. For example, the position data 301 may include a current location of the vehicle 101 based at least in part on an onboard GPS module. In such contexts, the performance data 303 may include one or more measurements configured to indicate a level of accuracy of the onboard GPS module. For example, the performance data 303 may include measurements of satellite signal strength, user range error (URE), user range rate error (URRE), and/or the like. In some embodiments, the performance data 303 includes descriptive information of one or more onboard systems configured to generate the current location of the vehicle 101. For example, the performance data 303 may include a make, model, manufacturer, type, setting, configuration, version, and/or the like of firmware, software, hardware, and/or the like that is configured to generate a current location of the vehicle 101.

In some embodiments, travel pathway data 115 includes one or more travel pathways of the vehicle 101 (e.g., historical, current, and future travel pathways). For example, travel pathway data 115 may include a destination 307, such as a landing site (e.g., airport, helipad, ground station, and/or the like), a political boundary, a geographical feature, and/or the like. In some embodiments, the travel pathway data 115 includes one or more notices 308 associated with a travel pathway of the vehicle 101. A respective notice 308 may include advisory information, warnings, instructions, and/or the like, which may be associated with safe and/or efficient operation and navigation of the vehicle. A notice 308 may be associated with a regulatory agency, vehicle traffic management service, weather monitoring service, and/or the like. For example, in an aerial context, a notice 308 may include one or more notice to air missions (NOTAM) submitted to and/or issued by an aviation authority.

In some embodiments, a NOTAM may comprise a SNOWTAM, BIRDTAM, ASHTAM, temporary flight restriction (TFR), flight data center (FDC) NOTAM, FLOWTAM, and/or the like. A SNOWTAM may provide a surface condition report notifying the presence or cessation of hazardous conditions due to snow, ice, slush, frost, standing water or water associated with snow, slush, ice or frost on the movement area. A BIRDTAM may provide information regarding bird strike risk or warning. An ASHTAM may indicate activity of a volcano, a volcanic eruption, volcanic ash cloud, and/or the like that is of significance to vehicle operation and navigation. A TFR may indicate one or more areas restricted to air travel due to a hazardous condition, a special event, or a general warning. An FDC NOTAM may indicate approach conditions, instrument flight procedure alterations, air traffic service route changes, and/or the like. A FLOWTAM may indicate vehicle traffic flow conditions, such as air traffic density.

In some embodiments, travel pathway data 115 includes available pathways 310 for approaching a destination 307. For example, travel pathway data may include available pathways 310 for approaching an airport or other landing site. In some embodiments, an available pathway 310 includes a predefined trajectory, heading, route and/or the like for navigating to a destination 307. In some embodiments, an available pathway 310 comprises a Required Navigation Performance (RNP) approach configured to enable a vehicle 101 to navigate to a landing site along a predefined flight path in instances where the vehicle 101 meets onboard position monitoring requirements. In some embodiments, the onboard position monitoring requirements include one or more thresholds or other criteria pursuant to position monitoring accuracy, position monitoring equipment specification or configuration, and/or the like. For example, an RNP pathway may be associated with a requirement that the vehicle 101 be capable of monitoring its own position to within a circle with a radius of 3 tenths of a nautical mile (NM). In various embodiments, the apparatus 200 is configured to determine, via the SLM 111, whether a vehicle 101 satisfies thresholds or other criteria for navigating along an RNP pathway (e.g., a positive determination indicating that the RNP pathway is "available"). For example, the SLM 111 may predict whether an RNP pathway is available for a vehicle 101 based at least in part on a knowledge base comprising a travel pathway of the vehicle 101 and RNP pathways associated with a destination 307 of the travel pathway. The knowledge base may further comprise respective requirements of the RNP pathways, position data 301 indicative of current vehicle location, and performance data 303 indicative of position monitoring accuracy. In some embodiments, the apparatus 200 obtains data associated with RNP pathway availability from memory onboard the vehicle 101. Additionally, or alternatively, in some embodiments, the apparatus 200 obtains data associated with RNP pathway availability from one or more externals systems, such as remote services, ground control stations, other vehicles, and/or the like.

In some embodiments, environment data 117 comprises landing site data 314, weather data 316, and/or the like. In some embodiments, landing site data 314 describes infrastructure, capabilities, and/or the like, that are available at a landing site. For example, landing site data 314 may indicate availability of visibility infrastructure including runway visual range (RVR) systems, lighting aides, retroreflective markings, and/or the like. In some embodiments, lighting aides include precision approach path indicators (PAPI), approach light systems (ALS), visual approach slope indicators (VASI), and/or the like.

In some embodiments, weather data 316 includes one or more meteorological conditions present or forecasted along a travel pathway of the vehicle 101 (e.g., including at a destination 307). In some embodiments, weather data 316 includes wind patterns, wind intensities, wind shear or other turbulence-causing conditions, temperature, pressure, precipitation levels, precipitation types (e.g., rain, snow, sleet, fog, ice, and/or the like), dust or other debris conditions, and/or the like. In some embodiments, weather data 316 includes respective locations, durations, and/or the like of meteorological conditions, which may provide a knowledge base for predicting travel pathway adjustments for avoiding such conditions to reduce resource consumption (e.g., fuel, flight hours, component stress, and/or the like).

In various embodiments, model data 113 includes queries 305. The queries 305 may include a current query that is inputted to the SLM 111. Additionally, the queries 305 may include historical queries previously inputted to the SLM 111, an LLM 110, or an SLM 111 aboard another vehicle. In some embodiments, a query 305 includes natural language text, audio recordings, and/or the like. In some embodiments, a query 305 includes metadata including a receipt timestamp, a vehicle identifier, a vehicle operator identifier, and/or the like. In some embodiments, the model data 113 includes one or more configurations 306. A respective configuration 306 may include parameters, settings, knowledge bases, and/or the like that define a generative AI model, such as an SLM 111 or LLM 110. In some embodiments, a configuration 306 includes settings for sampling temperature, nucleus sampling (e.g., top P), context window, maximum tokens, stop sequence, frequency penalty, present penalty, and/or the like.

In various embodiments, the one or more knowledge bases of the SLM 111 (or LLM 110) include current and historical vehicle data 109, travel pathway data 115, and environment data 117, historical queries 305, historical predictive outputs 309 (e.g., responses to previous queries), and/or the like. For example, the SLM 111 may be instructed to generate a predictive output in accordance with a query 305, and, in response, the SLM 111 may predict natural language text for responding to the query based at least in part on a knowledge base comprising historical queries, historical responses, vehicle data 109, travel pathway data 115, environment data 117, and/or the like.

In some embodiments, the model data 113 includes predictive outputs 309 generated by the SLM 111. For example, the model data 113 may include a current predictive output 309 and one or more historical predictive output 309 generated by one or more configurations 306 of the SLM 111. Additionally, in some embodiments, the model data 113 includes historical predictive outputs 309 generated by the LLM 110, additional SLMs 111 aboard other vehicles, and/or the like. In some embodiments, a predictive output 309 includes a response configured to provide requested information, guidance, confirmation, and/or the like, in the form of natural language text and/or computer-generated audio. For example, a predictive output 309 may include natural language text that provides forecasted weather reports, NOTAM information, RNP path availability, travel pathway adjustments, available visibility infrastructure, and/or the like.

In some embodiments, a predictive output 309 includes one or more probability scores 313 configured to indicate a level of confidence in the AI-generated response. For example, a probability score 313 may indicate a level of likelihood of success in resolving a query 305 based at least in part on the response. In some embodiments, the model data 113 includes one or more thresholds 315 comprising preconfigured values to which probability scores 313 may be compared. For example, a respective threshold 315 may include a minimum value of probability score for determining whether a predictive output 309 demonstrates a sufficient likelihood of resolving a query such that the AI-generated response may be outputted to the vehicle operator. As another example, a first threshold 315 may be associated with determining whether a predictive output 309 is associated with a low level of confidence, and a second threshold 315 may be associated with determining whether the predictive output 309 is associated with a high level of confidence. In various embodiments, the apparatus 200 applies one or more thresholds 315 to determine whether a predictive output 309 of the SLM 111 may be outputted to a vehicle operator, or if the associated query 305 may be downlinked to a remote computing environment 103 such that an LLM 110 may generate a response. In some embodiments, the remote computing environment 103 applies one or more thresholds 315 to determine whether a predictive output 309 of the LLM 110 may be uplinked to the vehicle 101 for output to a vehicle operator, or if the associated query 305 may be provisioned to a human operations team for manual response generation.

In some embodiments, the model data 113' of the LLM 110 comprises one or more configurations 306' of the LLM 110. In some embodiments, the model data 113' comprises one or more knowledge bases 317 comprising respective queries 305, predictive outputs 309, vehicle data 109, travel pathway data 115, environment data 117, and/or the like, associated with a plurality of SLMs 111 aboard various vehicles. The knowledge base 317 may further comprise historical queries 305, predictive outputs 309, vehicle data 109, travel pathway data 115, environment data 117, and/or the like, associated with one of more configurations 306' of the LLM 110. Additionally, in some embodiments, the knowledge base 317 comprises vehicle documentation, maintenance reports, heuristics, manual responses, and/or the like. In various embodiments, the model data 113' is iteratively updated based at least in part on model data 113 associated with one or more SLMs 111. Additionally, LLM 110 may be iteratively trained based at least in part on the model data 113', including newly obtained SLM configurations, predictive outputs, queries, vehicle data, travel pathway data, environment data, manual responses, and/or the like. In some embodiments, the SLM 111 is updated based at least in part on the model data 113' of the LLM 110. In this manner, the SLM 111 and LLM 110 may be continuously augmented to increase the accuracy, scope, and depth of query support.

FIG. 4 illustrates an example workflow 400 for conditional passenger guidance. In some embodiments, in response to determining that output of an onboard SLM 111 fails to satisfy a confidence threshold, the apparatus provisions a downlink message 401A, 401B to the remote computing environment 103 via one or more networks 150. For example, in an aerial context, the vehicle 101 may be configured to send and receive messages via a communication management unit, aircraft communication addressing and reporting system (ACARS), and/or the like. Further, one or more artificial satellites may receive messages from the vehicle 101 and relay the messages to a satellite ground receiver. In various embodiments, the remote computing environment 103 includes one or more ground servers configured for receiving and sending messages from and to the vehicle 101 (e.g., via one or more networks 150, including satellite-based communication).

In some embodiments, based at least in part on a query, the apparatus 200 generates a predictive output via the SLM 111. In some embodiments, the predictive output includes a response to the query and a probability score indicative of a likelihood of success (e.g., confidence) in resolving the query via the response. In some embodiments, the apparatus 200 compares the apparatus 200 compares the probability score to one or more predetermined thresholds to determine whether the probability score is associated with a high or a low level of confidence. In some embodiments, in response to determining that the probability score is associated with a high level of confidence, the apparatus 200 outputs the response to one or more interfaces within the vehicle 101 such that a vehicle operator may access or view the response. In some embodiments, in response to determining that the probability score is associated with a low level of confidence, the apparatus 200 provisions to the remote computing environment 103 a DL message comprising the query.

In some embodiments, the remote computing environment 103 monitors for DL messages (indicium 403). For example, a ground server may monitor for receipt of DL messages from one or more vehicles. The DL message may include a query obtained from a subject aboard the vehicle 101. In some embodiments, in response to receiving a DL message, the remote computing environment 103 causes an LLM 110 to generate a predictive output based at least in part on the DL message. The predictive output may include a response to a vehicle operator's query and a probability score indicative of a level of confidence in the response. In some embodiments, the remote computing environment 103 determines whether the probability score satisfies a predetermined threshold (indicium 405). For example, the remote computing environment 103 may compare the probability score to the predetermined threshold. Alternatively, in some embodiments, the remote computing environment 103 outputs the response to one or more computing devices accessible to operations personnel. In this manner, human personnel may review the generated response and determine whether the response is suitable for outputting to the vehicle 101.

In some embodiments, the remote computing environment 103 compares the probability score to one or more predetermined thresholds to determine whether the probability score is associated with a low or high level of confidence. In some embodiments, in response to determining that the probability score is associated with a high level of confidence, the remote computing environment 103 is configured to provision the predictive output directly to the ground server for uplink to the vehicle 101. In some embodiments, in response to determining that the probability score is associated with a low level of confidence, the remote computing environment 103 is configured to output the predictive output to operations personnel for approval. For example, in response to determining that the output of the LLM 110 fails to satisfy a confidence threshold, the remote computing environment 103 may provision to operations personnel a notification that indicates the query may require approval or a manual response (indicium 406).

In various embodiments, the remote computing environment 103 provisions the predictive output of the LLM 110 (or a manual response) to the vehicle 101 via the network 150 (indicia 407, 408). For example, the ground server may provision to the vehicle 101 an uplink message comprising the predictive output. In some embodiments, the LLM 110 is periodically trained with downlink messages (e.g., comprising queries) and uplink queries (e.g., comprising predictive outcomes) (indicium 409). In some embodiments, the LLM 110 is trained based at least in part on manually generated query responses such that the knowledge base of the model may be updated to better respond to similar future queries. In various embodiments, the LLM 110 is continuously trained based at least in part on queries, query responses, travel pathways, vehicle position updates, weather reports, vehicle maintenance reports, landing site information, and/or the like. For example, in an aerial context, the LLM 110 may be trained daily with requests comprising flight plans, weather reports, airport capability documentation, aviation authority notices, and/or the like.

In some embodiments, the remote computing environment 103 provisions a model update to the vehicle 101 to enable the apparatus 200 to update the SLM 111 (indicium 408). In this manner, the apparatus 200 and remote computing environment 103 may ensure the knowledge database is current and enhanced. Additionally, or alternatively, in some embodiments, the apparatus 200 provisions model data to the remote computing environment 103 to cause a model update to the LLM 110. In this manner, the LLM 110 at the remote computing environment 103 and SLMs 111 of respective vehicles 101 may conduct iterative model training in a federated mode. In some embodiments, in addition to providing support to operators onboard the vehicle 101, the remote computing environment 103 provides access to the LLM 110 via one or more platforms (e.g., web messaging services, instant messaging services, and/or the like) (indicium 411). In doing so, the LLM 110 and SLM s 111 may be further trained based at least in part on the interactions of customers, operations personnel, and/or the like.

### Example Processes of the Disclosure

Having described example systems and apparatuses, data architectures, and data flows in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally, or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

FIG. 5 illustrates a flowchart depicting operations of an example process 500 for providing generative AI-based query support in accordance with at least some example embodiments of the present disclosure. In some embodiments, the process 500 is embodied by computer program code stored on a non-transitory computer-readable storage medium of a computer program product configured for execution to perform the process as depicted and described. Additionally, or alternatively, in some embodiments, the process 500 is performed by one or more specially configured computing devices, such as apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described.

In some embodiments, the apparatus 200 is in communication with one or more internal or external apparatus(es), system(s), device(s), and/or the like, to perform one or more of the operations as depicted and described. For example, the apparatus 200 may communicate with one or more vehicle management systems 102, remote computing environments 103, other vehicles 101, and/or the like to perform one or more operations of the process 500.

At operation 503, the apparatus 200 includes means such as the model circuitry 209, the communications circuitry 205, the input/output circuitry 207, the processor 201, and/or the like, or a combination thereof, that obtain model data associated with an LLM that is external to the vehicle. For example, the apparatus 200 may obtain from a remote computing environment 103 model data 113 associated with an offboard LLM 110. In various embodiments, the model data 113 includes a configuration of the LLM 110. For example, the model data 113 may include additions or modifications to settings, parameters, knowledge bases, and/or the like, that are associated with a current version of the LLM 110 at the remote computing environment 103. The model data 113 may define an update to a current configuration of the SLM 111 onboard the vehicle 101. Additionally, or alternatively, in some embodiments, the model data obtained at operation 503 is associated with one or more SLMs 111 aboard other vehicles. For example, the apparatus 200 may obtain model data 113 from another vehicle 101, the remote computing environment 103, and/or the like, and the model data 113 may comprise a respective configuration of one or more SLMs 111 aboard other vehicles 101.

In some embodiments, the apparatus 200 performs operation 503 in response to determining that one or more predictive outputs generated by an onboard SLM 111 fail to meet a predetermined confidence threshold (e.g., a probabilistic score of the predictive output fails to satisfy a predetermined score threshold). For example, the apparatus 200 may perform operation 503 in response to making such a determination at operation 515. Additionally, or alternatively, in some embodiments, the apparatus 200 performs operation 503 in response to determining that the vehicle 101 is positioned at a landing site and connected to a data gateway at the landing site. For example, in an aerial context, the apparatus 200 may perform operation 503 in response to determining that the vehicle 101 has landed at an airport and a gatelink network connection has been established.

At operation 506, the apparatus 200 includes means such as the model circuitry 209, the communications circuitry 205, the input/output circuitry 207, the processor 201, and/or the like, or a combination thereof, that update an SLM aboard the vehicle based at least in part on the model data. For example, the apparatus 200 may update the SLM 111 aboard the vehicle 101 based at least in part on model data 113 obtained at operation 503. In some embodiments, the model data 113 includes a configuration of one or more LLMs, SLMs, and/or the like, and the apparatus 200 determines a subset of the configuration that may be applied to the SLM 111 aboard the vehicle 101. For example, based at least in part on available memory, the apparatus 200 may determine a subset of a knowledge base that may be stored aboard the vehicle 101. As another example, the apparatus 200 may determine one or more differences between respective settings, parameters, and/or the like of the SLM 111 and the one or more offboard models. The apparatus 200 may modify the settings, parameters, and/or the like of the SLM 111 to configure the model in accordance with the settings, parameters, and/or the like of the offboard models.

At operation 509, the apparatus 200 includes means such as the model circuitry 209, the communications circuitry 205, the input/output circuitry 207, the processor 201, and/or the like, or a combination thereof, that obtain a query for downlink (DL). For example, the apparatus 200 may obtain a query for DL. In some embodiments, the apparatus 200 obtains the query via one or more user inputs to a graphical user interface (GUI). For example, a GUI may be rendered on a display of a computing device and comprise one or more input fields, such as text boxes, selectable indicia, and/or the like. A vehicle operator may provide user input to the GUI in the form of selections, inputted natural language text, and/or the like. The apparatus 200 may obtain the user input from the computing device, the user input defining a query. In some embodiments, the apparatus 200 obtains an audio recording associated with an interior of the vehicle 101. The audio recording may include one or more utterances of the operator of the vehicle. The apparatus 200 may generate a query based at least in part on the audio recording. For example, the apparatus 200 may process the audio recording via one or more natural language recognition techniques to generate text data based at least in part on the utterances of the vehicle operator.

In some embodiments, the query includes a request for data, instruction, confirmation, and/or the like. For example, the query may include a request for weather information. As another example, the query may include a request for availability of required navigation performance (RNP) pathways pursuant to a landing site of the vehicle. In some contexts, RNP pathway availability refers to whether a vehicle 101 meets criteria for navigating along and RNP pathway, such as positional accuracy requirements, requisite hardware, firmware, software, and/or the like. Alternatively, in some contexts, availability of RNP pathways may refer to whether a destination (e.g., airport, landing site, and/or the like) is associated with any RNP pathways. In another example, the query may include a request for notice to air mission (NOTAM) information that is relevant to the vehicle 101, the travel pathway of the vehicle 101, a destination of the vehicle 101, and/or the like. In another example, the query may include a request for available visibility infrastructure at the landing site of the vehicle 101 (e.g., runway visual range (RVR) systems, retroreflective markings, lighting aides, and/or the like). As another example, the query may include a request for cost effective routing from the vehicle to a destination or other landing site, which, in some approaches, may be associated with transmissions via Aircraft Communication Addressing and Reporting System (ACARS), ACARS over Internet protocol (IP) or electronic flight bag (EFB)). In some embodiments, the apparatus 200 is configured to generate a contextual representation of a query based at least in part on the current position of the vehicle 101, the travel pathway, one or more historical queries, one or more historical responses, and/or the like.

At operation 512, the apparatus 200 includes means such as the model circuitry 209, the communications circuitry 205, the input/output circuitry 207, the processor 201, and/or the like, or a combination thereof, that generate a predictive output via the onboard SLM and based at least in part on the query. For example, the apparatus 200 may generate a predictive output via the SLM 111 and based at least in part on the query of operation 509. In some embodiments, the predictive output includes a response to the query. For example, the predictive output may include natural language text that embodies a response to the query (e.g., providing requested information, guidance, confirmation, and/or the like). Additionally, in some embodiments, the predictive output includes a probability score indicative of a likelihood that the response satisfies the query. For example, the probability score may indicate a level of confidence in the generated response.

In some embodiments, based at least in part on the query, the apparatus 200 is configured to generate an instruction for input to the SLM 111 and which is configured to cause the SLM 111 to generate the predictive outcome. In some contexts, the instruction may be referred to as a "prompt." In various embodiments, the instruction includes natural language text comprising the query. For example, the apparatus 200 may obtain a query comprising "what is the weather on the ground?" and generate an instruction in the form of "what are the forecasted ground conditions at [X] destination," where [X] represents a destination of the vehicle 101 based at least in part on a travel pathway. In some embodiments, the apparatus 200 is configured to augment the model prompts based at least in part on vehicle data, travel pathway data, and/or the like. For example, the apparatus 200 may generate an instruction in the form of "based on the travel pathway located at [Y], what are the forecasted ground conditions at arrival," where [Y] includes a digital reference to travel pathway data stored aboard the vehicle 101 (e.g., the travel pathway data indicating a destination, such as an airport). In some embodiments, the apparatus 200 performs one or more retrieval-augmented generation (RAG) processes to augment model prompts and improve the accuracy, granularity, and contextual relevance of model outputs.

In various embodiments, the SLM 111 generates the predictive output based at least in part on the query and data that is local to the vehicle 101. For example, the SLM 111 may be configured to access vehicle data, travel pathway data, environment data, and/or the like that is stored onboard the vehicle. Additionally, or alternatively, in some embodiments, the SLM 111 is configured to generate the predictive output based at least in part on one or more knowledge bases that are external to the vehicle 101. For example, the SLM 111 may be configured to obtain vehicle data, travel pathway data, environment data, and/or the like, from one or more external sources, such as remote weather monitoring services, equipment manufacturer websites, vehicle traffic monitoring services, vehicle emergency or advisory notification services, landing site infrastructure, and/or the like.

At operation 515, the apparatus 200 optionally includes means such as the model circuitry 209, the communications circuitry 205, the input/output circuitry 207, the processor 201, and/or the like, or a combination thereof, that determine whether the probability score of the predictive output satisfies a predetermined threshold. For example, the apparatus 200 may compare the probability score of the predictive output to one or more predetermine thresholds to determine whether confidence in the response is satisfactory. In some embodiments, in response to determining that the probability score satisfies the predetermined threshold, the process 500 proceeds to operation 524. In some embodiments, in response to determining that the probability score fails to satisfy the predetermined threshold, the process 500 proceeds to operation 518. For example, in response to determining that the output of the onboard SLM 111 fails to meet predetermined confidence thresholds, the apparatus 200 may determine that the onboard-generated response is inadequate and downline the query to a remote computing environment 103 to enable an offboard LLM 110 to generate a response to the query.

At operation 518, the apparatus 200 optionally includes means such as the model circuitry 209, the communications circuitry 205, the input/output circuitry 207, the processor 201, and/or the like, or a combination thereof, that provision a downlink (DL) message to a remote computing environment. For example, the apparatus 200 may provision a DL message to a remote computing environment 103 (e.g., the remote computing environment 103 associated with operation 503, or another remote computing environment 103). In various embodiments, the DL message comprises the query, the predictive output generated by the onboard SLM 111, and/or the like. In some embodiments, the remote computing environment 103 generates a predictive output via an LLM 110 and based at least in part on the DL message. The predictive output of the LLM 110 may comprise a second response to the query. For example, the predictive output may comprise natural language text configured to provide data, guidance, confirmation, and/or the like, that was requested by the vehicle operator. Additionally, in some embodiments, the predictive output includes a probability score.

Additionally, or alternatively, in some embodiments, the apparatus 200 provisions the query, the predictive output, and/or the like, to another vehicle 101 to enable a second SLM 111 to generate a response to the query. For example, the apparatus 200 may determine that a second vehicle 101 comprises a more recently updated version of the SLM 111 and/or an SLM 111 having a greater knowledge base, parameter set, and/or the like. In response to the determination, the apparatus 200 may provision the query, the first predictive output, and/or the like to the second vehicle 101 to cause the SLM 111 thereon to generate a second predictive output, which may be received by the apparatus 200 of the first vehicle 101. As another example, the apparatus 200 may determine that a second vehicle 101 is located within a predetermined range of the vehicle 101 and, in response, provision the query, the first predictive output, and/or the like to the second vehicle 101.

At operation 521, the apparatus 200 optionally includes means such as the model circuitry 209, the communications circuitry 205, the input/output circuitry 207, the processor 201, and/or the like, or a combination thereof, that receive an uplink (UL) message from the remote computing environment. For example, the apparatus 200 may receive a UL message from the remote computing environment 103. In various embodiments, the UL message includes the predictive output generated by the LLM 110. For example, the UL message may include natural language text outputted by the LLM 110, which embodies a response to the query. Alternatively, in some embodiments, the UL message includes a response generated by human operators associated with the remote computing environment. For example, in response to the predictive output of the LLM 110 failing to satisfy a confidence threshold, a manual response to the query may be inputted by one or more offboard operators, technicians, and/or the like.

Additionally, or alternatively, in some embodiments, the apparatus 200 receives a response to the query from another vehicle 101. For example, at operation 518, the apparatus 200 may provision the query to a second vehicle 101 that comprises a second SLM 111. The vehicle 101 may generate a second response to the query via the second SLM 111. The apparatus 200 may receive from the second vehicle 101 one or more communications that define that second response to the query.

At operation 524, the apparatus 200 includes means such as the model circuitry 209, the communications circuitry 205, the input/output circuitry 207, the processor 201, and/or the like, or a combination thereof, that output the response to one or more interfaces of the vehicle. For example, the apparatus 200 may output the response to one or more interfaces of the vehicle 101 to enable the vehicle operator to access or view the requested information, guidance, confirmation, and/or the like. In some embodiments, the apparatus 200 causes rendering of the response on a display of a computing device within the vehicle 101. For example, the apparatus 200 may cause rendering of a GUI comprising the natural language text of the response. Additionally, or alternatively, in some embodiments, the apparatus 200 generates an utterance of a response via a computer voice module. The apparatus 200 may cause output of the utterance within the vehicle 101 via one or more computing devices. Additionally, or alternatively, in some embodiments, the apparatus 200 activates one or more haptic feedback devices to generate tactile sensations indicative of the response.

At operation 527, the apparatus 200 optionally includes means such as the model circuitry 209, the communications circuitry 205, the input/output circuitry 207, the processor 201, and/or the like, or a combination thereof, that provision model data to the remote computing environment to cause an update to the LLM. For example, the apparatus 200 may provision model data to the remote computing environment 103 to cause the remote computing environment 103 to update the LLM 110 based at least in part on the model data. In some embodiments, the apparatus 200 generates the model data based at least in part on a current configuration of the SLM 111, the query, the predictive output, and/or the like. In this manner, one or more apparatuses 200 on one or more vehicles 101 may train the LLM 110 in a federated manner. In doing so, the LLM 110 and SLMs 111 may be iterated upon and improved to increase the accuracy and scope of responding to queries.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method, comprising:
obtaining model data from a remote computing environment, wherein:
the remote computing environment is external to a vehicle and configured to maintain a large language model (LLM); and
the model data is associated with a configuration of the LLM;
updating a small language model (SLM) aboard the vehicle based at least in part on the model data;
obtaining at least one query for downlink (DL) from a computing device aboard the vehicle; and
generating, via the updated SLM, a predictive output based on the at least one query, wherein the predictive output comprises a response to the at least one query.

2. The method of claim 1, further comprising:
outputting the response to at least one interface aboard the vehicle.

3. The method of claim 1, wherein:
the predictive output further comprises a probability score indicative of a likelihood of success in resolving the at least one query via the response; and
the method further comprises:
in response to determining the probability score fails to satisfy a predetermined threshold, provisioning, from the vehicle, a DL message comprising the at least one query to a remote computing environment to cause the remote computing environment to generate a second predictive output via the LLM;
receiving, at the vehicle, an uplink (UL) message from the remote computing environment, wherein:
the UL message comprises a second predictive output;
the second predictive output was generated by the remote computing environment via the LLM; and
the second predictive output comprises a second response to the at least one query; and
outputting the second response to at least one interface aboard the vehicle.

4. The method of claim 1, wherein:
the configuration of the LLM is based at least in part on respective model data obtained from a plurality of SLMs aboard other vehicles.

5. The method of claim 1, further comprising:
generating second model data based at least in part on a configuration of the SLM aboard the vehicle, the at least one query, and the predictive output; and
provisioning the second model data from the vehicle to the remote computing environment to cause the remote computing environment to perform at least one of the following:
update the LLM based at least in part on the second model data; or
cause an update to at least one SLM aboard another vehicle, the update being based at least in part on the second model data.

6. The method of claim 1, wherein:
the at least one query comprises a request for weather information; and
the method further comprises:
determining that a current position of the vehicle is within a predetermined range of a destination, the destination being based at least in part on travel pathway data associated with the vehicle;
obtaining environment data associated with the destination; and
generating, via the updated SLM, the predictive output further based at least in part on the environment data associated with the destination.

7. The method of claim 1, wherein:
the at least one query comprises a request for availability of required navigation performance (RNP) pathways pursuant to a landing site of the vehicle; and
the method further comprises:
generating, via the updated SLM, the predictive output further based at least in part on travel pathway data associated with the vehicle and a position accuracy of the vehicle.

8. The method of claim 1, wherein:
the at least one query comprises a request for notice to air mission (NOTAM) information;
the method further comprises:
obtaining at least one NOTAM based at least in part on a travel pathway of the vehicle; and
generating, via the updated SLM, the predictive output based at least in part on the at least one NOTAM; and
the predictive output comprises natural language configured to describe the at least one NOTAM pursuant to the travel pathway of the vehicle.

9. The method of claim 8, wherein:
the at least one NOTAM comprises at least one of a SNOWTAM, BIRDTAM, ASHTAM, temporary flight restriction (TFR), flight data center (FDC) NOTAM, or FLOWTAM.

10. An apparatus comprising at least one processor and at least one non-transitory memory having computer-coded instructions stored thereon that, in execution with at least one processor, cause the apparatus to:
obtain model data from a remote computing environment, wherein:
the remote computing environment is external to a vehicle and configured to maintain an LLM; and
the model data is associated with a configuration of the LLM;
update an SLM aboard the vehicle based at least in part on the model data;
obtain at least one query for DL from a computing device aboard the vehicle; and
generate, via the updated SLM, a predictive output based on at least one query for DL, wherein the predictive output comprises a response to the at least one query.

11. The apparatus of claim 10, wherein:
the predictive output further comprises a probability score indicative of a likelihood of success in resolving the at least one query via the response; and
the instructions, in execution with the at least one processor, further cause the apparatus to:
in response to a determination that the probability score fails to satisfy a predetermined threshold, provision to the remote computing environment a DL message comprising the at least one query;
receive, from the remote computing environment, a UL message comprising a second response to the at least one query, the second response being based at least in part on user input at the remote computing environment; and
output the second response to at least one interface aboard the vehicle.

12. The apparatus of claim 10, wherein:
the predictive output further comprises a probability score indicative of a likelihood of success in resolving the query via the response; and
the instructions, in execution with the at least one processor, further cause the apparatus to:
cause output of the response on at least interface aboard the vehicle in response to a determination that the probability score satisfies a predetermined threshold.

13. The apparatus of claim 12, wherein:
the instructions, in execution with the at least one processor, further cause the apparatus to:
generate second model data based at least in part on a configuration of the updated SLM aboard the vehicle, the at least one query, and the predictive output; and
provision the second model data to the remote computing environment to cause the remote computing environment to update the LLM based at least in part on the second model data.

14. The apparatus of claim 12, wherein:
the instructions, in execution with the at least one processor, further cause the apparatus to:
generate second model data based at least in part on a configuration of the updated SLM aboard the vehicle, the at least one query, and the predictive output; and
provision the second model data to at least one other vehicle to cause the at least one other vehicle to update a second SLM based at least in part on the second model data.

15. A computer program product comprising at least one non-transitory computer-readable storage medium having computer program code stored thereon that, in execution with at least one processor, is configured to:
obtain model data from a remote computing environment, wherein:
the remote computing environment is external to a vehicle and configured to maintain an LLM; and
the model data is associated with a configuration of the LLM;
update an SLM aboard the vehicle based at least in part on the model data;
obtain at least one query for DL from a computing device aboard the vehicle; and
generate, via the updated SLM, a predictive output based on at least one query for DL, wherein the predictive output comprises a response to the at least one query.
